# EUROPÄISCHE PATENTANMELDUNG

(11) **EP 2 757 085 A2**
(43) Veröffentlichungstag der Anmeldung: **23.07.2014**
(21) Anmeldenummer: 14151505.6
(22) Anmeldetag: 16.01.2014
(51) Int. Cl.: C04B 41/72

(54) **Zusammensetzung und Verwendung**

(30) Priorität: 17.01.2013 DE 102013100472
(71) Anmelder: Alpin-Chemie GmbH, 87527 Sonthofen (DE)
(72) Erfinder: Winkler, Ralf-Peter, 87527 Sonthofen (DE)
(74) Vertreter: Hutzelmann, Gerhard

(57) **Zusammenfassung**

Zusammensetzung zur Verwendung als Absäurungs- und/oder Ätzmittel für Betonerzeugnisse, wobei einerseits Wirkstoffe zum Absäuern bzw. Anätzen und/oder Aufrauen der Oberfläche und Verdickungsmittel enthalten sind und zusätzlich Duftstoffe, Entschäumer und/oder andere Hilfsstoffe enthalten sein können.

## Beschreibung

Die Erfindung bezieht sich auf eine Zusammensetzung zur Verwendung als Absäurungs- und/oder Ätzmittel für Betonerzeugnisse.

Es sind verschiedenartige Zusammensetzungen des genannten Typs bekannt, die jedoch entweder durch ihre flüssige Konsistenz nur schwer verarbeitbar oder aber durch stechende und vor allem reizende Gerüche in der Regel nur mit Atemschutz einsetzbar sind.

Oftmals wird Salzsäure eingesetzt, die zwar sehr schnell auf die Oberfläche des Betons wirkt, aber neben dem stechenden Geruch auch gefährliche Dämpfe abgibt. Die abgegebenen Dämpfe, Chlorwasserstoff, reizen die Atemwege und wirken auf Metalle, die in der Umgegend vorhanden sind, extrem korrossiv.

Gerade in Innenräumen verbietet sich die Anwendung. Zumal der Arbeitsplatzgrenzwert für Chlorwasserstoff, der bei der Anwendung der Salzsäure auf dem Beton abgegeben wird, bei nur 3 mg/m³ Raumluft liegt. Atemschutz ist daher zwingend.

Aufgabe der Erfindung ist es eine leicht anwendbare und keine wesentlichen Nebenwirkungen auf den Anwender und andere Gegenstände aufweisende Zusammensetzung vorzuschlagen.

Diese Aufgabe wird erfindungsgemäß dadurch gelöst, daß einerseits Wirkstoffe zum Absäuern bzw. Anätzen und/oder Aufrauen der Oberfläche und Verdickungsmittel enthalten sind und zusätzlich Duftstoffe, Entschäumer und/oder andere Hilfsstoffe enthalten sein können.

Durch die Eindickung wird eine leichte Verarbeitbarkeit gewährleistet. Durch Duftstoffe können ungefährliche Gerüche überdeckt oder aber die Zusammensetzung gezielt markiert werden.

Dabei hat es sich als sehr vorteilhaft erwiesen, wenn als Wirkstoff eine schnell wirkende und/oder eine wenig riechende Säure vorgesehen ist.

Durch die Verwendung einer wenig oder bestenfalls gar nicht riechenden Säure wird der Einsatz von Atemschutz oder dergleichen überflüssig. Um die Bearbeitungszeiten kurz zu halten, ist die Verwendung einer schnell wirkenden Säure sehr vorteilhaft. Denkbare Säuren sind beispielsweise Methansulfonsäure und Phosphorsäure.

Ebenfalls sehr vorteilhaft ist es erfindungsgemäß, wenn ein Salz als Wirkstoff vorgesehen ist.

Salze sind unproblematisch handhabbar. Die dieser Erfindung entsprechenden sauer wirkende Salze ätzen die Oberfläche an. Im Bauteil enthaltene Zuschlagstoffe werden hervorgehoben.

Erfindungsgemäß hat es sich als besonders vorteilhaft erwiesen, wenn ein Hydrochlorid, insbesondere Harnstoffhydrochlorid oder andere Hydrochloride, zum Beispiel Hydrochloride hergestellt durch Reaktion von Salzsäure mit Harnstoff oder Derivaten davon, Biuret oder Derivaten davon, Monoethanolamin, Diethanolamin, Triethanolamin oder Derivaten davon oder dergleichen vorgesehen ist.

Insbesondere Harnstoffhydrochlorid hat sich im Zusammenhang mit Betonoberflächen als schnell wirkend erwiesen, wobei die Geruchsbelästigung minimal bis nicht vorhanden ist. Vor allem werden keine reizenden Dämpfe abgegeben. Korrossive Wirkungen auf die Umgegend treten ebenfalls nicht auf. Bei nicht vorhandenem Geruch kann es zweckdienlich sein, die Zusammensetzung durch Zugabe eines Duftstoffes zu markieren. Weitere aus der Reaktion von Aminen, insbesondere Harnstoff oder dessen Derivaten, mit anderen Säuren hergestellte Salze sind auch denkbar. Beispielsweise ist hier ein derart hergestelltes Salz der Methansulfonsäure zu nennen.

Dabei hat es sich erfindungsgemäß als sehr vorteilhaft erwiesen, wenn die Reaktion der Säure zum Salz nicht vollständig ist.

Damit kann eine geringe Restmenge an Säure in der Zusammensetzung vorgehalten werden, welche die Reaktion auf dem Betonerzeugnis vorteilhaft beeinflusst.

Eine weitere sehr vorteilhafte Ausgestaltung der Erfindung liegt vor, wenn als Verdickungsmittel Füllstoffe wie zum Beispiel Kieselsäure, Silikate oder dergleichen, Assoziativverdicker und/oder Kombinationen davon vorgesehen sind.

Diese Verdickungsmittel haben sich als besonders vorteilhaft erwiesen und sorgen auch an senkrechten Flächen für den nötigen Halt der Zusammensetzung.

Ebenfalls sehr vorteilhaft ist es erfindungsgemäß, wenn ein Entschäumer, vorzugsweise ein modifiziertes Polysiloxan oder ein anderer Entschäumer vorgesehen ist.

Durch den Einsatz eines Entschäumers wird sichergestellt, daß die Zusammensetzung keine Lufteinschlüsse in Form von Luftbläschen eines Schaums aufweist.

Eine weitere sehr vorteilhafte Ausgestaltung der Erfindung liegt vor, wenn ein Netzmittel, vorzugsweise ein Tensid vorgesehen ist.

Durch ein Netzmittel wird die Benetzung der zu bearbeitenden Oberfläche deutlich verbessert und gleichmäßiger.

Als sehr vorteilhaft hat es sich erfindungsgemäß erwiesen, wenn ein Duftstoff vorgesehen ist.

Durch einen Duftstoff können Restgerüche überdeckt werden, aber auch eine Markierung der Zusammensetzung ist denkbar. Verschiedenste Duftstoffe können eingesetzt werden.

Ebenfalls als sehr vorteilhaft hat es sich erwiesen, wenn ein Farbstoff vorgesehen ist.

Hiermit kann die Zusammensetzung sehr leicht gekennzeichnet werden. Eine Überwachung der Anwendungsschichtdicke ist ebenfalls sehr leicht möglich.

Sehr vorteilhaft ist es erfindungsgemäß, wenn die Zusammensetzung folgende Inhaltsstoffe enthält:
Wirkstoff 10 bis 99,9 Gew-%, vorzugsweise 10 bis 90 Gew-%
Verdickungsmittel 0,1 bis 20 Gew-%, vorzugsweise 1 bis 20 Gew-%
Entschäumer 0 bis 5 Gew-%
Netzmittel 0 bis 5 Gew-%
Duftstoffe 0 bis 5 Gew-%
Farbstoffe 0 bis 5 Gew-%
Rest Lösungsmittel, vorzugsweise Wasser.

Bei diesen Verhältnissen zwischen den Inhaltsstoffen wurden beste Ergebnisse bei der Absäuerung bzw. Anätzung und/oder Aufrauung von Betonoberflächen erzielt.

Eine besonders vorteilhafte Verwendung einer erfindungsgemäßen Zusammensetzung liegt vor, wenn die Zusammensetzung zur Behandlung von Betonoberflächen als gelartige Substanz auf diesen aufgebracht wird.

Damit wird eine gleichmäßige Behandlung ermöglicht, die zudem aufgrund der eingesetzten Wirkstoffe keine wesentliche Geruchsbelästigung erzeugt.

Dabei hat es sich als sehr vorteilhaft erwiesen, wenn die Zusammensetzung die Oberfläche absäuert, anätzt bzw. aufraut.

Im folgenden wird die Erfindung anhand eines Ausführungsbeispiels veranschaulicht.

Eine besonders vorteilhafte erfindungsgemäße Zusammensetzung liegt vor, wenn 50 Gew-% eines Wirkstoffes, hier Harnstoffhydrochlorid, 4 Gew-% eines Verdickungsmittels, vorzugsweise pyrogene Kieselsäure enthalten sind. Als Lösungsmittel ist Wasser vorgesehen und ergänzt die Gewichtsanteile auf 100%.

Eine weitere vorteilhafte Zusammensetzung liegt vor, wenn 50 Gew-% eines Wirkstoffes, hier Harnstoffhydrochlorid, 4 Gew-% eines Verdickungsmittels, vorzugsweise pyrogene Kieselsäure, 0,5 Gew-% eines Entschäumers, hier haben sich modifizierte Polysiloxane als sehr wirksam erwiesen, sowie 0,5% eines Duftstoffes und 0,5% eines Netzmittels in einem Lösungsmittel wie Wasser enthalten sind.

Zum Absäuern und Anätzen von Betonoberflächen, insbesondere um deren Struktur bzw. enthaltene Zuschlagstoffe hervorzuheben, die sich beim Abbinden bildende Haut zu entfernen und/oder um die Bindungswirkung eines weiteren Betonteils zu erhöhen, wird Salzsäure und Salzsäurezusammensetzungen eingesetzt. Diese hat jedoch den großen Nachteil, daß bei der Anwendung der Salzsäure auf dem Beton ein stechender und stark reizender Geruch durch Freisetzung von Chlorwasserstoff entsteht, der zudem auch extrem korrosiv auf Metalle in der Umgegend wirkt.

Die vorliegende Zusammensetzung wirkt in etwa genauso schnell auf die Betonoberfläche ein wie Salzsäure, erzeugt aber keine gesundheitlich bedenklichen oder korrosiven Dämpfe oder Gerüche.

Durch das enthaltene Verdickungsmittel lässt sich die Zusammensetzung sehr leicht in ausreichender Menge auf der Oberfläche verteilen, ohne daß diese vorzeitig wegläuft oder abtropft.

Dabei wurden beste Ergebnisse mit pyrogener Kieselsäure erzielt die hier eine sehr gute Verdickungswirkung aufweist.

Der Entschäumer ist wahlweise vorzusehen und sorgt dafür, daß die Zusammensetzung beim Aufrühren oder auch bei der Verarbeitung nicht oder nur in unbedenklichem Maße aufschäumt.

Der wahlweise enthaltene Duftstoff markiert die Zusammensetzung und kann auch dafür genutzt werden um einen Indikator dafür zu haben, wann die Reaktion abgeschlossen ist. Der Duftstoffanteil wird dabei so gewählt, daß der Duft bei Reaktionsende verflogen ist.

Auch als reine Markierung stellt der Duftstoff einen Sicherheitsaspekt dar. Es wird damit angezeigt, daß die Zusammensetzung aufgetragen ist.

Duftstoffe können vielfältig ausgewählt werden.

Auch ist es denkbar, wenn die Zusammensetzung mit einem Farbstoff versehen ist. Dadurch kann sehr leicht die notwendige Schichtdicke bei der Verarbeitung kontrolliert werden. Auch kann damit sichergestellt werden, daß keine Rückstände der Zusammensetzung auf dem Bauteil verbleiben, wenn dieses Weiterverarbeitet wird. Es ist dabei auch denkbar, daß die durch den Farbstoff erzeugte optische Wirkung durch die Anwendung der Zusammensetzung verändert wird. Hierbei ist beispielsweise ein Farbumschlag denkbar.

Auch ein Netzmittel kann in der Zusammensetzung enthalten sein, wobei hier verschiedenartigste Tenside einsetzbar sind. Durch die Verwendung eines Netzmittels wird eine gleichmäßigere Beaufschlagung der Oberfläche mit der Zusammensetzung ermöglicht.

Die Verwendung anderer Hydrochloride, zum Beispiel Hydrochloride hergestellt durch Reaktion von Salzsäure mit Harnstoff oder dessen Derivaten, Biuret oder Derivaten davon, Monoethanolamin, Diethanolamin, Triethanolamin oder Derivaten davon, ist denkbar.

Denkbar ist auch die Kombination eines Salzes und einer Säure als Wirkstoff. So kann beispielsweise eine Mischung aus Harnstoffhydrochlorid und Zitronensäure eingesetzt werden. Die damit erzielten Ergebnisse bei der Behandlung der Oberflächen sind nochmals verbessert. Die Wirkzeit und/oder die Wirkgeschwindigkeit wird erhöht.

Denkbar ist in diesem Zusammenhang auch, daß die Reaktion der Säure zum Salz nicht vollständig abgelaufen ist und deswegen noch eine Restmenge der Säure in der Zusammensetzung vorhanden ist.

Beispielsweise ist auch eine Kombination mit Methansulfonsäure und/oder Phosphorsäure denkbar.

## Patentansprüche

1. Zusammensetzung zur Verwendung als Absäurungs- und/oder Ätzmittel für Betonerzeugnisse, **dadurch gekennzeichnet, daß** einerseits Wirkstoffe zum Absäuern bzw. Anätzen und/oder Aufrauen der Oberfläche und Verdickungsmittel enthalten sind und zusätzlich Duftstoffe, Entschäumer und/oder andere Hilfsstoffe enthalten sein können.

2. Zusammensetzung nach Anspruch 1, **dadurch gekennzeichnet, daß** als Wirkstoff eine schnell wirkende und/oder eine wenig riechende Säure vorgesehen ist.

3. Zusammensetzung nach Anspruch 1 oder 2, **dadurch gekennzeichnet, daß** ein Salz als Wirkstoff vorgesehen ist.

4. Zusammensetzung nach Anspruch 3, **dadurch gekennzeichnet, daß** ein Hydrochlorid, insbesondere Harnstoffhydrochlorid oder andere Hydrochloride, zum Beispiel Hydrochloride hergestellt durch Reaktion von Salzsäure mit Harnstoff oder Derivaten davon, Biuret oder Derivaten davon, Monoethanolamin, Diethanolamin, Triethanolamin oder Derivaten davon oder dergleichen vorgesehen ist.

5. Zusammensetzung nach Anspruch 4, **dadurch gekennzeichnet, daß** die Reaktion der Säure zum Salz nicht vollständig ist.

6. Zusammensetzung nach einem der vorangehenden Ansprüche, **dadurch gekennzeichnet, daß** als Verdickungsmittel Füllstoffe wie zum Beispiel Kieselsäure, Silikate oder dergleichen, Assoziativverdicker und/oder Kombinationen davon vorgesehen sind.

7. Zusammensetzung nach einem der Ansprüche 1 bis 6, **dadurch gekennzeichnet, daß** ein Entschäumer, vorzugsweise ein modifiziertes Polysiloxan oder ein anderer Entschäumer vorgesehen ist.

8. Zusammensetzung nach einem der vorangehenden Ansprüche, **dadurch gekennzeichnet, daß** ein Netzmittel, vorzugsweise ein Tensid vorgesehen ist.

9. Zusammensetzung nach einem der vorangehenden Ansprüche, **dadurch gekennzeichnet, daß** ein Duftstoff vorgesehen ist.

10. Zusammensetzung nach einem der vorangehenden Ansprüche, **dadurch gekennzeichnet, daß** ein Farbstoff vorgesehen ist.

11. Zusammensetzung nach einem der vorangehenden Ansprüche, **dadurch gekennzeichnet, daß** die Zusammensetzung folgende Inhaltsstoffe enthält:
Wirkstoff 10 bis 99,9 Gew-%, vorzugsweise 10 bis 90 Gew-%
Verdickungsmittel 0,1 bis 40 Gew-%, vorzugsweise 1 bis 20 Gew-%
Entschäumer 0 bis 5 Gew-%
Netzmittel 0 bis 5 Gew-%
Duftstoffe 0 bis 5 Gew-%
Farbstoffe 0 bis 5 Gew-%
Rest Lösungsmittel, vorzugsweise Wasser.

12. Verwendung einer Zusammensetzung nach einem der vorangehenden Ansprüche, **dadurch gekennzeichnet, daß** die Zusammensetzung zur Behandlung von Betonoberflächen als gelartige Substanz auf diesen aufgebracht wird.

13. Verwendung nach Anspruch 12, **dadurch gekennzeichnet, daß** die Zusammensetzung die Oberfläche absäuert, anätzt bzw. aufraut.
